# EUROPÄISCHE PATENTSCHRIFT

(11) **EP 0 743 274 B1**
(45) Veröffentlichungstag und Bekanntmachung des Hinweises auf die Patenterteilung: **13.01.1999**
(21) Anmeldenummer: 95107753.6
(22) Anmeldetag: 19.05.1995
(51) Int. Cl.: B66C 21/00, B66C 11/20

(54) **Seilkrananlage und Transportverfahren**
Skyline crane and transportation method
Blondin et méthode de transportation

(43) Veröffentlichungstag der Anmeldung: 20.11.1996
(73) Patentinhaber: Werlberger, Josef, A-6335 Thiersee (AT)
(72) Erfinder: Werlberger, Josef, A-6335 Thiersee (AT)
(74) Vertreter: Heim, Hans-Karl, Dipl.-Ing.

(56) Entgegenhaltungen:
- EP-A- 0 161 437
- AT-B- 177 159
- AT-B- 178 373
- DE-A- 4 202 457
- US-A- 1 994 963
- US-A- 3 863 774
- US-A- 4 005 779
- US-A- 4 440 305

## Beschreibung

Die Erfindung betrifft eine Seilkrananlage gemäß dem Oberbegriff des Anspruchs 1 und ein Transportverfahren mittels Seilkrananlage gemäß dem Oberbegriff des Anspruchs 9.

Ein gattungsgemäßer Stand der Technik geht aus der US-A-4,005,779 hervor. Aus der US-A-3,863,774 ist zudem eine Vorrichtung bekannt, bei der beide Enden eines Zugseiles mit einer Antriebseinheit verbunden sind und ein Tragseil in einem Mittenabschnitt des Zugseiles durch Spleißen mit diesem verbunden ist.

Bei dem gattungsgemäßen Transportvorfahren ist erforderlich, den auf dem Tragseil verfahrbaren Laufwagen solange an der Beladestelle anzuhalten, bis das Zugseil mit dem Sammelende durch die mit den Sammelringen versehenen Nutzlasten gefädelt und in den Laufwagen eingezogen ist. Die zweite Möglichkeit ist das Anhängen der Last an einen am Zugseilende befestigten Lasthaken.

Die erste Variante erfordert einen hohen Zeitaufwand beim Durchfädeln des Zugseiles durch die Sammelringe vor allem im schwierigen und steilen Gelände, wodurch die ganze Seilkrananlage während dem Beladen angehalten werden muß. Dies bringt entscheidende Einbußen bei der Bringungsleistung mit sich, wodurch die Holzbringung mittels Seilkran gegenüber anderen Verfahren wie mittels Schlepper oder Harvester unverhältnismäßig kostenintensiv und dadurch nur begrenzt zum Einsatz kommt, obwohl es von der Bodenschonung her das optimale Verfahren wäre.
Bei der zweiten Variante mit dem Lasthaken können nur diejenigen Nutzlasten (vorwiegend Holzstamme) angehängt werden, die in unmittelbarer Nähe, das sind aufgrund der Schlingenlänge maximal 2,5 Meter Entfernung vom Lasthaken, liegen. Dies bedeutet bei einem Holzschlag von mehreren hundert Metern und speziell bei dem immer mehr zum Tragen kommenden Durchforsten, daß die gesamte Anlage aufgrund der sehr verstreut liegenden Holzstamme nur zu einem Bruchteil der maximal möglichen und mit einem vernünftigen Transportsystem realisierbaren Kapazität arbeiten kann. Dies bedeutet einen mit Variante 1 vergleichbaren Kostennachteil.
Ein weiterer Nachteil der oben erwähnten, bereits bekannten Verfahren ist, daß an der Entladestelle die Lasten einzeln vom Zugseil abgehängt werden müssen, um dann zum Wegbringen von der Entladestelle erneut an eine Verzugswinde, einen Schlepper oder Traktor angehängt zu werden, wodurch wiederum ein erheblicher Zeitaufwand bei erhöhtem Sicherheitsrisiko betrieben werden muß.

Der Erfindung liegt die **Aufgabe** zugrunde, eine Seilkananlage und ein Transportverfahren der eingangs genannten Art anzugeben, mit denen die oben erwähnten Nachteile vermieden werden. Insbesondere soll es möglich sein, während der Transportbewegung des Laufwagens weitere Anhängeseile durch die mit der Nutzlast zu versehenen Sammelringe zu fädeln, wodurch der Laufwagen unmittelbar nach dem Stoppen und Abhängen des leeren Anhängeseiles mit der vollen Nutzlast beladen und weggezogen werden kann und an der Entladestelle die noch an dem Anhängeseil hängende Last insgesamt abgehängt und direkt an die Verzugseinrichtung angehängt werden kann.

Die Aufgabe wird einerseits durch eine Seilkrananlage mit den Merkmalen des Anspruchs 1 und ein Transportverfahren mit den Merkmalen des Anspruchs 9 gelöst.

Erfindungsgemäß wird vorgesehen, daß das Zugseil um ein mittels Verbindungsglied an- und abhängbares Anhängeseil verlängert wird, wobei Lastpendel und / oder Zugseilklemmung sowie Umlenkrolle des Laufwagens so dimensioniert sind, daß das Verbindungsglied, welches ein Mehrfaches des Zugseildurchmessers aufweist, durch den Laufwagen gezogen werden kann und daß ein Hilfs- bzw. Rückholsell ebenfalls durch den Laufwagen geführt sein und damit das Verbindungsglied samt durchhängendem Zugseil aus dem Laufwagen ziehen kann.

Die Erfindung wird anhand von Zeichnungen näher erläutert. In den Zeichnungen zeigen:
- Fig. 1 und 2: eine Ausführung der Erfindung in einer schematischen Darstellung;
- Fig. 3 und 4: ein Ausführungsbeispiel eines Lastpendels;
- Fig. 5 und 6: ein Ausführungsbeispiel für eine Exzenterklemmvorrichtung;
- Fig. 7: ein Anhängeseil mit Haltestücken und
- Fig. 8: ein Ausführungsbeispiel eines Verbindungsgliedes.

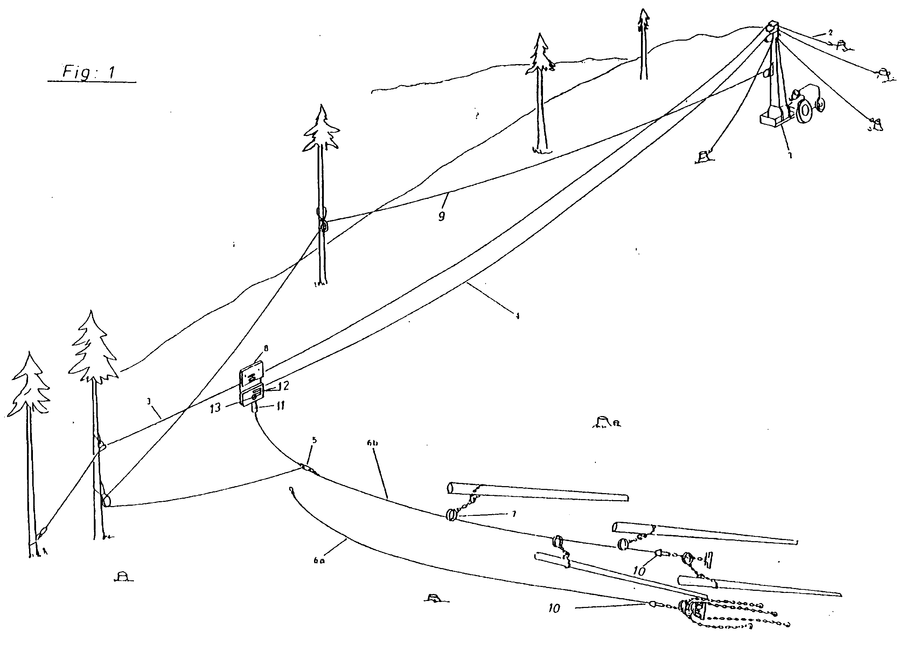

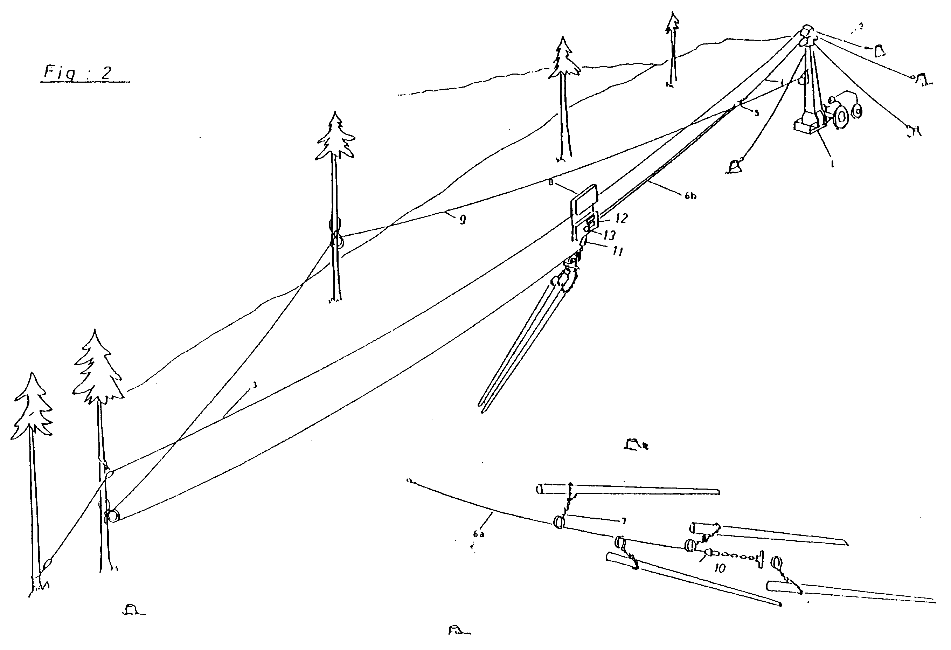

Die Arbeitsweise zum Verfahren Anhängeseil (TAGLINE) wird aufgegliedert in 14 Arbeitsschritten anhand der Fig. 1 und Fig. 2 beschrieben.
1) Bewegung des Laufwagens (8) vom Antrieb (1) weg mittels Gravitation bei Betrieb ohne Hilfsseil (9) oder bergauf bzw. auf der Ebene mittels Hilfsseil (9) (Punkt 1 ist gleich wie bei bisher bekannten Systemen).
2) Stoppen des Laufwagens an der Beladestelle mittels Anhalten des Zugseiles (4) bei Gravitationsbetrieb bzw. Anhalten des Hilfsseiles (9) bei Betrieb bergab/eben (Punkt 2 gleich).
3) Festklemmen des Laufwagens (8) am Tragseil (3) mittels antomatischer Zeitschaltung bzw. Funk (gleich wie bisher).
4) Erfindungsgemäß ist das Absenken des Tagline-End-/Zentrierstückes (10) mittels Ziehen an dem durch den Laufwagen geführten Hilfsseil (9), wodurch auch bei großem Durchhang des Zugseiles (4), Verbindungsgliedes (5) und TAGLINE (6b) der leere Lasthaken abgesenkt bzw. die gewünschte Strecke aus dem Laufwagen (8) gezogen werden kann.
5) Erfindungsgemäß ist auch das Abhängen der leeren TAGLINE (6a) vom Zugseil (4) wird ermöglicht durch das entriegelbare Verbindungsglied (5).
6) Erfindungsgemäß ist ebenfalls das Anhängen der bereits durch die mit den Bäumen verbundenen Chokerringe (7) gezogene Tagline (6b) an das Zugseil (4) mittels Verbindungsglied (5).
7) **Gleich** wie bei bekannten Systemen ist das Einziehen der Last in den Laufwagen (8). Erfindungsgemäß passiert das Verbindungsglied (5) den Laufwagen (8).
8) Wenn das End-/Zentrierstück (10) in den Laufwagen (8) gezogen wird, löst die Tragseilklemmung im Laufwagen und die Tagline (6b) bzw. das Zugseil (bei Funkbetrieb möglich) wird im Laufwagen (8) verriegelt.
9) Ziehen des Laufwagens samt Last zur Entladestelle wie bei herkömmlichen Systemen.
10) Wie Punkt 3.
11) Absenken der Last mittels Nachlassen am Zugseil (4) wie bisher. Erfindungsgemäß ist das verziehen der noch an der Tagline hängenden Lasten mittels Zugseil (4), zusätzlichem Seil oder Schlepper.
12) Das neue System ermöglicht das verziehen der noch gesammelten Last mittels Fremdfahrzeug oder fremdwinde. Dies geschieht gleichzeitig während der Bewegung des Laufwagens (8), wodurch eine erhebliche Steigerung der Bringungsleistung bis zu 40% ermöglicht wird.
13) Erfindungsgemäß ist das Anhängen einer leeren Tagline (6a) an das Zugseil (4).
14) Einziehen laut Punkt 7 und 8.
15) Neuer Arbeitszyklus beginnt bei Punkt 1.

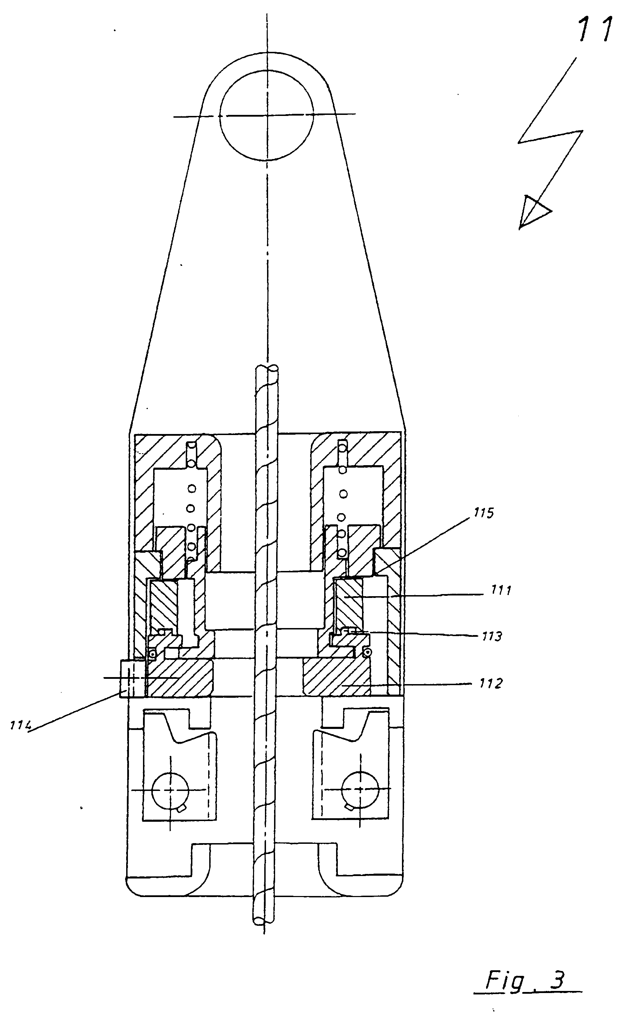

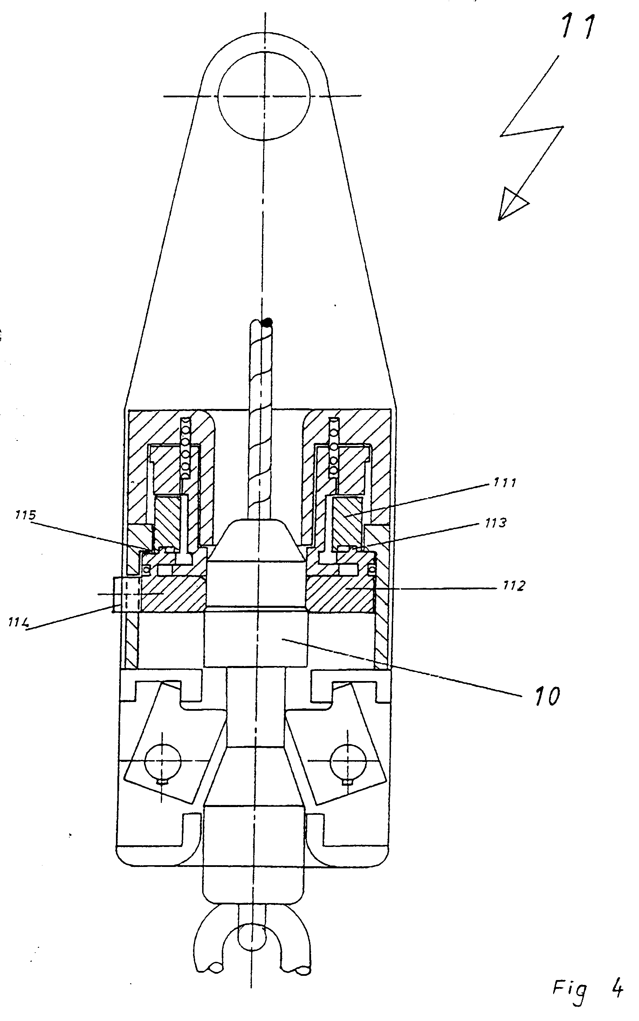

Die Fig. 3 und 4 zeigen ein Ausführungsbeispiel des Lastpendels (8), ohne jedoch darauf beschränkt zu werden.

Dabei zeigt die Fig. 3 den Zustand des ausgefahrenen Zentrier-/Endstückes (10), bei dem der geteilte Schaltring (112) samt aufgeschraubter Schaltnocke (114) in jedem Fall seitlich aus dem Zentrum verschoben sind. Somit ist auch der Zentrierring (111) über den Innendurchmesser des Zentrierrandes (113) aus der Mitte und die Sperrkante (115) sperrt die Einwärtsbewegung in das Lastpendel und verhindert so eine ungewollte Fehlschaltung durch das einfahrende Seil, die Verbindungsglieder (5) oder die Haltestücke (61).

Erst durch das einfahrende Zentrier-/Endstück (10) wie in Fig. 4 dargestellt wird der geteilte Schaltring (112) in seinen Segmenten radial nach außen erweitert und gleichzeitig zentriert, wodurch der Zentrierrand (113) über seinen Außendurchmesser den Zentrierring (111) zentriert und somit das Passieren der Sperrkante (115) ermöglicht.

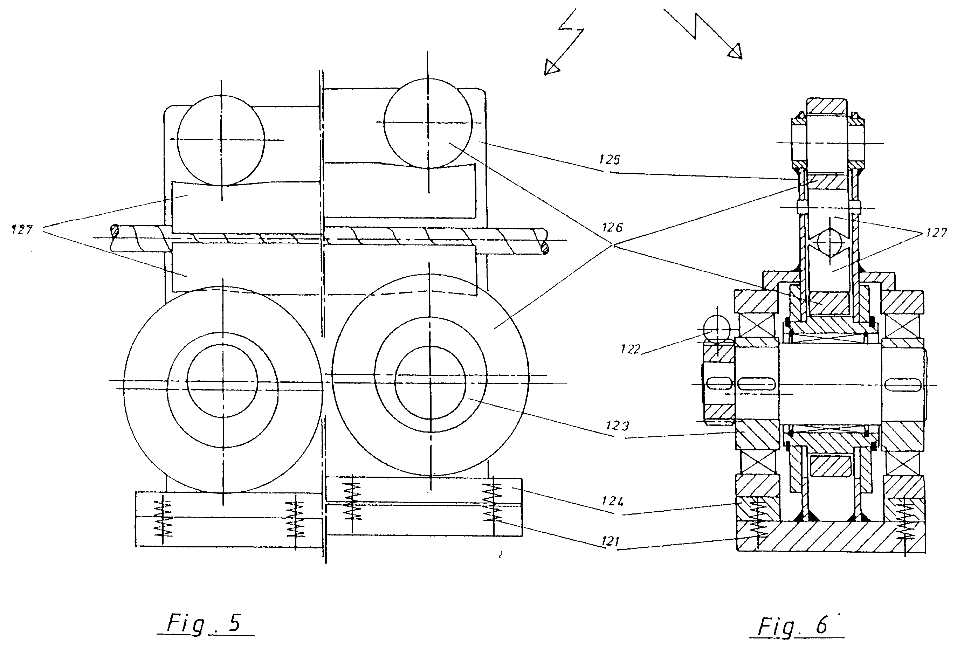

Weiters zeigen die Fig. 5 und 6 ein Ausführungsbeispiel für die Exzenterklemmvorrichtung 12, wobei das Zug- oder das Anhängeseil in der offenen Stellung lt. Fig. 6 passieren kann und in der geschlossenen Position lt Fig. 5 formschlüssig festgehalten werden kann. Dabei wird die Vorklemmung mittels Feder (121) erreicht, die auf einen Zahnstangen- Ritzeltrieb (122) wirkt, damit die Exzenter (123) gegen die angefederten Leisten (124) drücken und über Zugbleche (125) die Auflaufrollen (126) gegen die Klemmbacken (127) pressen. Die Hauptklemmung wird durch Anziehen am Zugseil oder Anhängeseil erreicht.

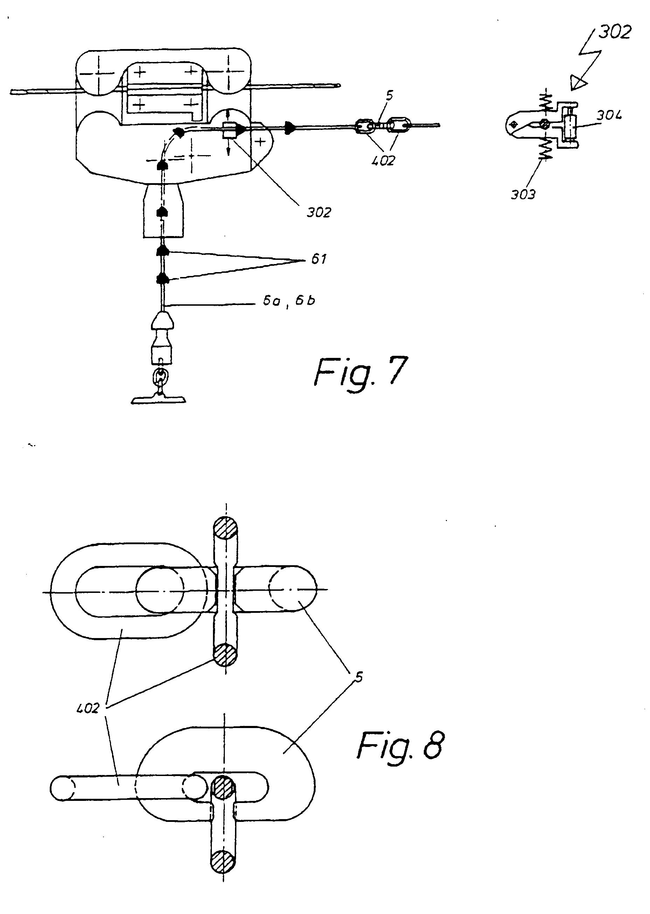

Die Fig. 7 zeigt ein Anhangeseil mit Haltestücken (61), die im Laufwagen durch eine formschlüssige Verriegelungseinrichtung (302) in der gewünschten Position festgehalten werden kann. Das Schließen der Verriegelung geschieht dabei über Federn (303) und das Öffnen mittels Hydraulikzylinder (304).

Die Fig. 8 zeigt ein Ausführungsbeispiel eines Verbindungsgliedes (5), wobei die An- und Abhängeöffnung (401) so ausgebildet ist, daß das An- und Abhängen der Seilbefestigungsglieder (402) nur in einer einzigen Position, die im Betrieb nie vorkommt und nur durch händische beabsichtigte Bewegung, möglich ist.

## Patentansprüche

1. Seilkrananlage, insbesondere für Holztransporte, mit einer Antriebseinheit (1), einem Tragseil (3), einem Zugseil (4) und einem Laufwagen (8),
dadurch **gekennzeichnet,**
daß ein an- und abhängbares Anhängeseil (6a,6b) vorgesehen ist,
daß das Anhängeseil (6a, 6b) mit einem Verbindungsglied (5) zur Verlängerung des Zugseils (4) an dieses anhängbar ist.

2. Seilkrananlage nach Anspruch 1,
dadurch **gekennzeichnet,**
daß der Laufwagen (8) ein Lastpendel (11), und/oder eine Zugseilklemmung (12) und eine Umlenkrolle (13) aufweist, die so dimensioniert sind,
daß das Verbindungsglied (5), welches ein mehrfaches des Zugseil-Durchmessers aufweist, durch den Laufwagen (8) gezogen werden kann.

3. Seilkrananlage nach einem der Ansprüche 1 oder 2,
dadurch **gekennzeichnet,**
daß ein Hilfsseil (9) vorgesehen ist, welches ebenfalls durch den Laufwagen (8) führbar ist, wobei das Verbindungsglied (5) mit dem Zugseil (4) aus dem Laufwagen (8) ziehbar ist.

4. Seilkrananlage nach einem der vorhergehenden Ansprüche,
dadurch **gekennzeichnet,**
daß im Lastpendel (11) ein Zentrierring (111) mit seiner Planfläche das Einziehen des geteilten Schaltringes (112) in das Lastpendel an der Verriegelungskante (115) solange sperrt, bis das eingezogene Zentrier-Endstück (10) den geteilten Schaltring (112) und über die Zentriernasen (113) auch den Zentrierring (111) zentriert und die Einwärtsbewegung des Schaltringes (112) mit der aufgeschraubten Schaltnocke (114) in das Lastpendel freigibt.

5. Seilkrananlage nach einem der vorhergehenden Ansprüche,
dadurch **gekennzeichnet,**
daß das Zugseil oder das Anhängeseil (6a, 6b) mittels Exzenterklemmvorrichtung (12) kraftschlüssig im Laufwagen (8) festgehalten werden kann, wobei die Vorklemmung mittels Feder erreicht wird (121) die auf einen Zahnstangen - Ritzeltrieb (122) wirkt, damit die Exzenter (123) gegen die angefederten Leisten (124) drücken, über Zugbleche (125) die Auflaufrollen (126) gegen die Klemmbacken (127) gedrückt werden und die Hauptklemmung erreicht wird durch Anziehen am Zugseil oder Anhängeseil (Tagline), wobei die Klemmbacken (127) mittels Keilwirkung zwischen Auflaufrollen (126) und Seil (4, 6a, 6b) gepreßt werden.

6. Seilkrananlage nach einem der vorhergehenden Ansprüche,
dadurch **gekennzeichnet,**
daß im Laufwagen (8) eine formschlüssige Verriegelungseinrichtung (302) auf ein mit Haltestücken (61) versehenes Anhängeseil (6a, 6b) wirken kann, wobei das Schließen mittels Feder (303) und das Öffnen mittels Hydraulikzylinder (304) bewerkstelligt wird.

7. Seilkrananlage nach einem der vorhergehenden Ansprüche,
dadurch **gekennzeichnet,**
daß die Haltestücke (61) in regelmäßigen Abständen am Anhängeseil (6a, 6b) befestigt sein können.

8. Seilkrananlage nach einem der vorhergehenden Ansprüche,
dadurch **gekennzeichnet,**
daß das Verbindungsglied 5 mit einer An- und Abhängeöffnung (401) versehen ist, die so ausgebildet ist, daß das geschlossene Verbindungsglied (5, 402) nur in der entlasteten Querposition geometrisch entriegelt ist.

9. Transportverfahren mittels Seilkrananlage mit Antriebseinheit (1), Tragseil (3), Zugseil (4), Hilfsseil (9) und automatisch klemmbarem Laufwagen (8) vorwiegend für Holztransporte,
dadurch **gekennzeichnet,**
daß das Zugseil (4) um das mittels Verbindungsglied (5) an- und abhängbare Anhängeseil (6a, 6b) verlängert wird, wobei Lastpendel (11) und/oder Zugseilklemmung (12) sowie Umlenkrolle (13) des Laufwagens (8) so dimensioniert sind, daß das Verbindungsglied (5), welches ein Mehrfaches des Zugseil-Durchmessers aufweist, durch den Laufwagen gezogen werden kann, daß das Hilfsseil (9) mit dem Verbindungsglied (5) verbunden ist und ebenfalls durch den Laufwagen (8) gezogen werden kann, und daß das Hilfsseil (9) ebenfalls durch den Laufwagen (8) geführt ist, wobei das Verbindungsglied (5) samt durchhängendem Zugseil (4) aus dem Laufwagen (8) ziehbar ist.

10. Transportverfahren nach einem der vorhergehenden Ansprüche
dadurch **gekennzeichnet,**
daß im Lastpendel (11) ein Zentrierring (111) mit seiner Planfläche das Einziehen des geteilten Schaltringes (112) in das Lastpendel an der Verriegelungkante (115) solange sperrt, bis das eingezogene Zentrier-Endstück (10) den geteilten Schaltring (112) und über die Zentriernasen (113) auch den Zentrierring (111) zentriert und die Einwärtsbewegung des Schaltringes (112) mit der aufgeschraubten Schaltnocke (114) in das Lastpendel freigibt.

11. Transportverfahren nach einem der vorhergehenden Ansprüche,
dadurch **gekennzeichnet,**
daß das Zugseil oder das Anhängeseil mittels Exzenterklemmvorrichtung (12) kraftschlüssig im Laufwagen festgehalten werden kann, wobei die Vorklemmung mittels Feder erreicht wird (121) die auf einen Zahnstangen - Ritzelbetrieb (122) wirkt, damit die Exzenter (123) gegen die angefederten Leisten (124) drücken, über Zugbleche (125) die Auflaufrollen (126) gegen die Klemmbacken (127) gedrückt werden und die Hauptklemmung erreicht wird durch Anziehen am Zugseil oder Anhängeseil (Tagline), wobei die Klemmbacken (127) mittels Keilwirkung zwischen Auflaufrollen (126) und Seil (4, 6a, 6b) gepreßt werden.

12. Transportverfahren nach einem der vorhergehenden Ansprüche,
dadurch **gekennzeichnet,**
daß eine formschlüssige Verriegelungs-Einrichtung (302) auf ein mit Haltestücken (61) versehenes Anhängeseil (6a, 6b) wirken kann, wobei das Schließen mittels Feder (303) und das Öffnen mittels Hydraulikzylinder (304) bewerkstelligt wird.

13. Transportverfahren nach Anspruch 12,
dadurch **gekennzeichnet,**
daß die Haltestücke (61) in regelmäßigen Abständen am Seil befestigt sein können.

14. Transportverfahren nach einem der vorhergehenden Ansprüche,
dadurch **gekennzeichnet,**
daß das Verbindungsglied (5) mit einer An- und Abhängeöffnung (401) versehen ist, die so ausgebildet ist, daß das geschlossene Glied (402) nur in der entlasteten Querposition geometrisch entriegelt ist.

## Claims

1. Skyline crane, particularly for transporting wood, having a drive unit (1), a carrying cable (3), a hoisting cable (4) and a bogie truck (8), characterized in that an attachable and detachable attached cable (6a, 6b) is provided and that the attached cable (6a, 6b) is attachable to the hoisting cable (4) by a connecting member (5) for extending the latter.

2. Skyline crane according to claim 1, characterized in that the bogie truck (8) has a load pendulum (11) and/or a hoisting cable clamp (12) and a pulley block (13), which are so dimensioned that the connecting member (5), which is a multiple of the hoisting cable diameter, can be drawn through the bogie truck (8).

3. Skyline crane according to one of the claims 1 or 2, characterized in that an auxiliary cable (9) is provided, which is also guidable by the bogie truck (8), the connecting member (5) with the hoisting cable (4) being drawable out of the bogie truck (8).

4. Skyline crane according to one of the preceding claims, characterized in that a centring ring (111) with its planar face in the load pendulum (11) blocks the drawing in of the split control ring (112) into the load pendulum at the locking edge (115) until the drawn in centring end piece (10) centres the split control ring (112) and via centring noses (113) also the centring ring (111) and releases the inwards movement of the control ring (112) with the screwed on trip cam (114) into the load pendulum.

5. Skyline crane according to one of the preceding claims, characterized in that the hoisting cable or the attached cable (6a, 6b) can be secured non-positively in the bogie truck (8) by means of the eccentric clamping device (12), preclamping being achieved by means of spring (121) acting on a rack and pinion drive (122), so that the eccentrics (123) press against the sprung ledges (124) by means of tension plates (125), which press the take-up rolls (126) against the clamping jaws (127) and the main clamping is achieved by tightening on the hoisting cable or attached cable (tag line) the clamping jaws (127) being pressed by a hedge action between the take-up rolls (126) and cable (4, 6a, 6b).

6. Skyline crane according to one of the preceding claims, characterized in that a positive locking device (302) can act in the bogie truck (8) on an attached cable (6a, 6b) provided with holding pieces (61), closing being brought about by spring (303) and opening by hydraulic cylinder (304).

7. Skyline crane according to one of the preceding claims, characterized in that the holding pieces (61) can be fixed at regular intervals to the attached cable (6a, 6b).

8. Skyline crane according to one of the preceding claims, characterized in that the connecting member (5) is provided with an attaching and detaching opening (401), which is so constructed hat the closed connecting member (5, 402) is only geometrically unlocked in the unloaded transverse position.

9. Transportation method by means of skyline crane with drive unit (1), carrying cable (3), hoisting cable (4), auxiliary cable (9) and automatically clampable bogie truck (8), mainly for the transportation of wood, characterized in that the hoisting cable (4) is lengthened by the attached cable (6a, 6b) attachable and detachable by the connecting member (5), a load pendulum (11) and/or hoisting cable clamp (12) and pulley block (13) of the bogie truck (8) being so dimensioned that the connecting member (5), which has a multiple of the hoisting cable diameter, can be drawn through the bogie truck, that the auxiliary cable (9) is connected to the connecting member (5) and can also be drawn through the bogie truck (8) and that the auxiliary cable (9) is also guided by the bogie truck (8), the connecting member (5) together with the sagging hoisting cable (4) being drawable out of the bogie truck (8).

10. Transportation method according to one of the preceding claims, characterized in that in the load pendulum (11) a centring rang (111) with its planar face blocks the drawing in of the split control ring (112) into the load pendulum on the locking edge (115) until the drawn in centring end piece (10) centres the split control ring (112) and via the centring noses (113) also the centring ring (111) and releases the inwards movement of the control ring (112) with the screwed on trip cam (114) into the load pendulum.

11. Transportation method according to one of the preceding claims, characterized in that the hoisting cable or the attached cable can be non-positively secured in the bogie truck by means of the eccentric clamping device (12), preclamping being brought about by means of spring (121) acting on a rack and pinion drive (122), so that the eccentrics (123) press against the sprung ledges (124), by means of tension plates (125) the take-up rolls (126) are pressed against the clamping jaws (127) and the main clamping is brought about by tightening on the hoisting cable or the attached cable (tag line), the clamping jaws (127) being pressed by wedge action between the take-up rolls (126) and cable (4, 6a, 6b).

12. Transportation method according to one of the preceding claims, characterized in that a positive locking device (302) can act on an attached cable (6a, 6b) provided with holding pieces (61), closing being brought about by means of spring (303) and opening by means of hydraulic cylinder (304).

13. Transportation method according to claim 12, characterized in that the holding pieces (61) can be fixed to the cable at regular intervals.

14. Transportation method according to one of the preceding claims, characterized in that the connecting member (5) is provided with an attaching and detaching opening (401), which is so constructed that the closed member (402) is only geometrically unlocked in the unloaded transverse position.

## Revendications

1. Blondin, en particulier pour le transport du bois, avec une unité d'entraînement (1), un câble porteur (3), un câble de traction (4') et un chariot (8), ***caractérisé en ce qu***'un câble de remorquage (6a, 6b) accrochable et décrochable est prévu, ***en ce que*** le câble de remorquage (6a, 6b) peut être relié, au moyen d'un élément de liaison (5), au câble de traction afin de prolonger celui-ci.

2. Blondin selon la Revendication 1, ***caractérisé en ce que*** le chariot (8) présente un pendule de charge (11), et/ou un blocage (12) du câble de traction et une poulie de renvoi (13), qui sont dimensionnés de telle sorte que l'élément de liaison (5), lequel présente un multiple du diamètre du câble de traction, puisse être tiré par le chariot (8).

3. Blondin selon l'une des Revendications 1 ou 2, ***caractérisé en ce qu***'un câble auxiliaire (9) est prévu, qui peut également être guidé par le chariot (8), l'élément de liaison (5) pouvant être tiré avec le câble de traction (4) hors du chariot (8).

4. Blondin selon l'une quelconque des Revendications précédentes, ***caractérisé en ce que***, dans le pendule de charge (11), une bague de centrage (111) empêche avec sa surface plane, contre le bord de verrouillage (115), l'insertion de la bague de commutation divisée (112) dans le pendule de charge jusqu'à ce que l'embout de centrage (10) inséré centre la bague de commutation divisée (112) et, par les nez de centrage (113), également la bague de centrage (111) et autorise le mouvement vers l'intérieur du pendule de charge de la bague de commutation (112) avec la came de commutation (114) vissée dessus.

5. Blondin selon l'une quelconque des Revendications précédentes, ***caractérisé en ce que*** le câble de traction ou le câble de remorquage (6a, 6b) peut être immobilisé par friction dans le chariot (8) au moyen d'un dispositif de blocage (12) à excentriques, le blocage préalable étant obtenu au moyen d'un ressort (121) qui agit sur un mécanisme (122) à pignon et crémaillère, afin que les excentriques (123) appuient contre les barres (124) montées sur ressort, les rouleaux de déplacement (126) sont pressés contre les mors (127) par des tôles de traction (125) et le blocage principal est obtenu par traction sur le câble de traction ou sur le câble de remorquage (tagline), les mors (127) étant pressés entre les rouleaux de défilement (126) et le câble (4, 6a, 6b) par un effet de enle.

6. Blondin selon l'une quelconque des Revendications précédentes, ***caractérisé en ce que***, dans le chariot (8), un dispositif de verrouillage (302) à engagement positif peut agir sur un câble de remorquage (6a, 6b) muni d'éléments d'arrêt (61), la fermeture s'effectuant au moyen d'un ressort (303) et l'ouverture au moyen d'un cylindre hydraulique (304).

7. Blondin selon l'une quelconque des Revendications précédentes, ***caractérisé en ce que*** les éléments d'arrêt (61) peuvent être fixés à intervalles réguliers sur le câble de remorquage (6a, 6b).

8. Blondin selon l'une quelconque des Revendications précédentes, ***caractérisé en ce que*** l'élément de liaison (5) est muni d'une ouverture d'accrochage et de décrochage (401) qui est conformée de telle sorte que l'élément de liaison fermé (5, 402) n'est déverrouillé géométriquement que dans la position transversaie déchargée.

9. Procédé de transport au moyen d'un blondin comprenant une unité d'entraînement (1), un câble porteur (3), un câble de traction (4), un câble auxiliaire (9) et un chariot (8) à immobilisation automatique, principalement pour le transport du bois, ***caractérisé en ce que*** le câble de traction (4) est prolongé par le câble de remorquage (6a, 6b) accrochable et décrochable au moyen de l'élément de liaison (5), le pendule de charge (11) et/ou le blocage de câble de traction (12) ainsi que la poulie de renvoi (13) du chariot (8) étant dimensionnés de telle sorte que l'élément de liaison (5), lequel présente un multiple du diamètre du câble de traction, puisse être tiré par le chariot, ***en ce que*** le câble auxiliaire (9) est relié à l'élément de liaison (5) et peut également être tiré par le chariot (8), et ***en ce que*** le câble auxiliaire (9) est guidé également par le chariot (8), l'élément de liaison (5) avec le câble de traction accroché (4) pouvant être tiré hors du chariot (8).

10. Procédé de transport selon l'une quelconque des Revendications précédentes, ***caractérisé en ce que***, dans le pendule de charge (11), une bague de centrage (111) empêche avec sa surface plane, contre le bord de verrouillage (115), l'insertion de la bague de commutation divisée (112) dans le pendule de charge jusqu'à ce que l'embout de centrage (10) inséré centre la bague de commutation divisée (112) et, par les nez de centrage (113), également la bague de centrage (111), et autorise le mouvement vers l'intérieur du pendule de charge de la bague de commutation (112) avec la carne de commutation (114) vissée dessus.

11. Procédé de transport selon l'une quelconque des Revendications précédentes, ***caractérisé en ce que*** le câble de traction ou le câble de remorquage peut être immobilisé par friction dans le chariot au moyen d'un dispositif de blocage (12) à excentriques, le blocage préalable étant obtenu au moyen d'un ressort (121) qui agit sur un mécanisme (122) à pignon et crémaillère, afin que les excentriques (123) appuient contre les barres (124) montées sur ressort, les rouleaux de déplacement (126) sont pressés contre les mors (127) par des tôles de traction (125) et le blocage principal est obtenu par traction sur le câble de traction ou sur le câble de remorquage (tagline), les mors (127) étant pressés entre les rouleaux de défilement (126) et le câble (4, 6a, 6b) par un effet de cale.

12. Procédé de transport selon l'une quelconque des Revendications précédentes, ***caractérisé en ce qu***'un dispositif de verrouillage (302) à engagement positif peut agir sur un câble de remorquage (6a, 6b) muni d'éléments d'arrêt (61), la fermeture s'effectuant au moyen d'un ressort (303) et l'ouverture au moyen d'un cylindre hydraulique (304).

13. Procédé de transport selon la Revendication 12, ***caractérisé en ce que*** les éléments d'arrêt (61) peuvent être fixés à intervalles réguliers sur le câble de remorquage (6a, 6b).

14. Procédé de transport selon l'une quelconque des Revendications précédentes, ***caractérisé en ce que*** l'élément de liaison (5) est muni d'une ouverture d'accrochage et de décrochage (401) qui est conformée de telle sorte que l'élément fermé (402) n'est déverrouillé géométriquement que dans la position transversale déchargée.
